# FASCICULE DE BREVET EUROPEEN

(11) **EP 4 133 168 B1**
(45) Date de publication et mention de la délivrance du brevet: **24.04.2024**
(21) Numéro de dépôt: 21723331.1
(22) Date de dépôt: 06.04.2021
(51) Int. Cl.: F02C 6/08, F01D 17/10, F02K 3/075, F04D 27/02

(54) **GRILLE DE CONDUIT DE DÉCHARGE À CANAUX ACOUSTIQUEMENT OPTIMISÉE**
AKUSTISCH OPTIMIERTES ENTLADUNGSLEITUNGSNETZ MIT KANÄLEN
ACOUSTICALLY OPTIMIZED DISCHARGE LINE GRID WITH CHANNELS

(30) Priorité: 10.04.2020 FR 2003664
(43) Date de publication de la demande: 15.02.2023
(73) Titulaire: SAFRAN AIRCRAFT ENGINES, 75015 Paris (FR); Ecole Centrale de Lyon, 69130 Ecully (FR); Centre national de la recherche scientifique, 75016 Paris (FR); Université Claude Bernard Lyon I, 69100 Villeurbanne (FR)
(72) Inventeur: REGNARD, Josselin, David, Florian, 77550 MOISSY-CRAMAYEL (FR); LAFFAY, Paul, Clément, Guillaume, 77550 MOISSY-CRAMAYEL (FR); JACOB, Marc, Cornelius, 31000 TOULOUSE (FR); MOREAU, Stéphane, Sherbrooke, QC J1K1T1 (CA)
(74) Mandataire: Cabinet Beau de Loménie
(86) Numéro de dépôt international: PCT/FR2021/050595
(87) Numéro de publication internationale: WO 2021/205107

(56) Documents cités:
- FR-A1- 3 044 705
- US-A1- 2012 006 615
- US-A1- 2012 256 107

## Description

### Domaine Technique

L'invention concerne le domaine les bruits des systèmes de propulsion d'un aéronef, et plus particulièrement des bruits des vannes de décharges utilisées sur les systèmes propulsifs des aéronefs.

### Technique antérieure

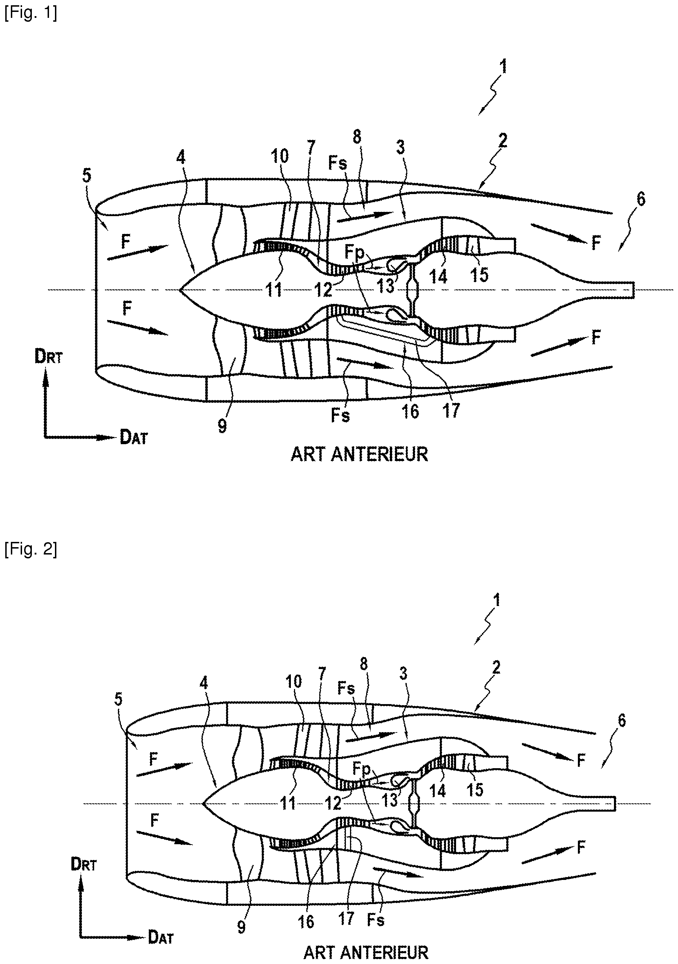

Dans la plupart des configurations, les systèmes propulsifs d'aéronefs, tels que des turbofan, turboprop, ou des open rotors, sont constitués comme le turboréacteur dont une vue en section dans un plan longitudinal du turboréacteur est illustrée sur la figure 1.

Le turboréacteur 1 comprend une nacelle 2, un carter intermédiaire 3 et un carter interne 4. La nacelle 2 et les deux carters 3 et 4 sont coaxiaux et définissent une direction axiale de turboréacteur D_{AT} et une direction radiale de turboréacteur D_{RT}. La nacelle 2 définit à une première extrémité un canal d'entrée 5 d'un écoulement de fluide et à une seconde extrémité, opposée à la première extrémité, un canal d'échappement 6 d'un écoulement de fluide. Le carter intermédiaire 3 et le carter interne 4 délimitent entre eux une veine primaire 7 d'écoulement de fluide. La nacelle 2 et le carter intermédiaire 3 délimitent entre eux une veine secondaire 8 d'écoulement de fluide. La veine primaire 7 et la veine secondaire 8 sont disposées selon une direction axiale de turboréacteur D_{AT} entre le canal d'entrée 5 et le canal d'échappement 6.

Le turboréacteur 1 comprend en outre une soufflante 9 configurée pour délivrer un flux d'air F comme écoulement fluidique, le flux d'air F étant divisé en sortie de la soufflante en un flux primaire Fp circulant dans la veine primaire 7 et en un flux secondaire Fs circulant dans la veine secondaire 8.

La veine secondaire 8 comprend un anneau de redresseurs 10, et la veine primaire 7 comprend un étage de compression basse pression 11, un étage de compression haute pression 12, une chambre de combustion 13, une turbine haute pression 14 et une turbine basse pression 15.

Les systèmes de propulsions d'un aéronef comprennent généralement des vannes de décharges 16 comme par exemple les vannes dénommées en anglais « Variable Bleed Valves » (VBV), « Transient Bleed Valves » (TBV) ou « Handling Bleed Valves » (HBV). Ces vannes 16 ont pour fonction de réguler le fonctionnement des turboréacteurs 2, en ajustant le débit d'air à l'entrée et/ou à la sortie du compresseur haute pression 12, pour augmenter la marge au pompage, à faible régime, ou lors des phases d'accélération ou de décélération. Le débit ainsi prélevé est évacué au travers d'un conduit 17, puis réintroduit dans la veine secondaire 8 acheminant le flux secondaire Fs, ou plus en aval dans le flux primaire Fp, suivant la stratégie employée.

Dans le cas où le débit d'air est réintroduit à l'aval de la veine primaire 7 acheminant le flux primaire Fp comme cela est illustré sur la figure 1 (cas courant pour la régulation des régimes transitoires), une pratique courante d'optimisation du système consiste en l'obstruction partielle du conduit par une grille multi-perforée ou un diaphragme. L'intérêt de cette optimisation est de générer une perte de charge permettant d'adapter le conditionnement thermodynamique de l'écoulement au milieu fluide dans lequel il sera réintroduit, dans des contraintes de masse et d'encombrement maitrisées. Le cas où la grille est positionnée dans le conduit est dénommé configuration en conduit.

Dans le cas illustré sur la figure 2, où le débit d'air est réintroduit dans la veine secondaire 8 acheminant le flux secondaire Fs, ou dans le cas où le débit d'air est réintroduit dans le milieu ambiant (cas courant pour la régulation des bas régimes), le conduit 17 du système de décharge est plus court et est, classiquement, dépourvu de diaphragme. Ceci étant, il est courant de positionner une grille à l'extrémité aval de ce conduit 17, afin de réduire les phénomènes aéro-acoustiques générés par l'éjection de gaz à haute vitesse. Le cas où la grille est positionnée à l'extrémité du conduit est dénommé configuration libre.

Dans les deux cas de figure illustrés sur les figures 1 et 2, un rayonnement acoustique significatif résulte de l'interaction entre la grille perforée et l'écoulement qui la traverse. Ce bruit, qui peut aller jusqu'à un niveau élevé sur l'échelle du bruit perçu effectif en décibels, connu en anglais sous l'abréviation EPNdB pour « Effective perceived noise in decibels », contribue au bruit avion, lors des transitions de régimes et à faible régime.

Il est connu une grille ayant des orifices en forme de venturi. L'objectif de l'utilisation de cette forme pour les orifices de la grille est d'amorcer l'écoulement au niveau du col (Nombre de Mach = 1 au niveau du col) et d'éviter la formation non contrôlée de chocs en aval de la grille. Ceci étant, la configuration de perforation proposée donne systématiquement lieu à une rupture de la section de passage au niveau de la surface amont de la grille (transition entre la section de passage associée au conduit et la section de passage à l'entrée dans la grille).

En outre, il est connu du document WO 2015/110748 une stratégie de réintroduction de la charge prélevée, ainsi que l'utilisation d'un diaphragme micro-perforé pour minimiser les pénalités acoustiques associées aux phénomènes supersoniques générés en aval de ce diaphragme.

Il est également connu des grilles de vanne de décharge présentant des canaux parallèles et horizontaux, c'est-à-dire s'étendant selon la direction du flux, pour éviter une zone morte liée à la déviation fournie par des portions non poreuses.

Des vannes de décharge selon l'art antérieur sont connues des documents US2012/256107A1 et US2012/006615A1.

### Exposé de l'invention

L'invention vise à proposer une grille améliorée permettant de minimiser l'intensité des phénomènes aéro-acoustiques générés par ce type de système de décharge. Dans un objet de l'invention, il est proposé une grille de décharge destinée à être montée à l'intérieur ou en sortie d'un conduit d'une vanne de décharge d'une turbomachine d'un aéronef, la grille de décharge comprenant une plaque perforée comportant une face amont destinée à recevoir un flux gazeux, une face aval opposée à la face amont et destinée à délivrer le flux gazeux reçue sur la face amont, et des orifices traversant la plaque perforée de la face amont à la face aval et destinés à acheminer le flux gazeux destiné à traverser la plaque perforée.

Selon une caractéristique générale de l'invention, la grille de décharge comprend en outre pour chaque orifice de la plaque perforée un canal tubulaire, coaxial à l'orifice auquel il est associé, et s'étendant depuis la face aval de la plaque perforée dans une direction orthogonale au plan dans lequel s'étend la plaque perforée.

Les canaux montés sur la face aval de la plaque perforée permettent de limiter l'interaction en les différents jets issus de chaque orifice de la plaque perforée de la grille de décharge. Chaque jet se développe ainsi indépendamment des autres à l'intérieur de son canal.

Selon un premier aspect de la grille de décharge, les canaux peuvent former une structure en nid d'abeille.

Cette configuration géométrique en nid d'abeilles offre une simplicité de conception ainsi qu'une optimisation de la surface de mélange de chaque cellule acoustique formée par chaque canal de la structure en nid d'abeille.

Selon un deuxième aspect de la grille de décharge, les canaux peuvent comprendre une section de passage définie dans un plan parallèle à la face aval de la plaque perforée, la section de passage des canaux ayant une longueur la plus grande dans le plan de la section comprise entre une et cinq fois un diamètre caractéristique des orifices.

Dans le cas où les orifices de la plaque perforée sont des trous circulaires, le diamètre caractéristique correspond au diamètre de chaque orifice.

Dans le cas où les orifices de la plaque perforée ne sont pas circulaires mais néanmoins de forme et de répartition uniformes, le diamètre caractéristique correspond au diamètre d'une section circulaire équivalente à la surface d'un orifice.

Dans le cas où les orifices de la plaque perforée ne sont ni circulaires, ni de forme équivalentes, mais néanmoins de répartition uniforme, le diamètre caractéristique correspond à la moyenne des diamètres des sections équivalentes à la surface de chaque orifice.

Une section de canal trop petite, c'est-à-dire inférieure au diamètre caractéristique, impliquerait une faible dissipation du jet isolé issu de chaque orifice de la plaque perforée. Au contraire, un canal de trop grande section, c'est-à-dire supérieur à cinq fois le diamètre caractéristique, n'optimiserait pas l'encombrement dans l'intégration moteur.

Selon un troisième aspect de la grille de décharge, la section de passage des canaux possède de préférence une longueur la plus grande dans le plan de la section égale à deux fois le diamètre caractéristique des orifices.

Cette dimension présente un optimum permettant à la fois aux jets isolés de se développer et se dissiper tout en limitant l'encombrement des canaux.

Selon un quatrième aspect de la grille de décharge, les canaux peuvent s'étendre, dans une direction orthogonale au plan dans lequel s'étend la plaque perforée, sur une longueur comprise entre une fois et cent fois le diamètre caractéristique des orifices.

Cette longueur de canaux permet de limiter l'interaction des jets tout en permettant la dissipation de l'énergie de chaque jet associé à chaque orifice. La longueur optimale dépend de la vitesse d'écoulement et donc du point de fonctionnement aérodynamique. La plage de longueurs définie ci-dessus permet de couvrir les plages de fonctionnement des vannes de décharge des turbomachines dont l'objectif est la propulsion d'aéronefs.

Selon un cinquième aspect de la grille de décharge, les canaux peuvent tous être cylindriques, rectilignes et ont tous la même longueur.

Dans une variante, les canaux peuvent être des canaux non rectilignes pour guider l'écoulement dans une direction distincte de la direction orthogonale au plan dans lequel s'étend la plaque perforée.

Dans un autre objet de l'invention, il est proposé une vanne de décharge pour turboréacteur d'aéronef comprenant un conduit destiné à acheminer un flux gazeux et au moins une grille de décharge telle que définie ci-dessus et montée à l'intérieur du conduit ou sur une sortie du conduit.

Selon un premier aspect de la vanne de décharge, la grille de décharge peut être montée à l'intérieur du conduit.

Selon un deuxième aspect de la vanne de décharge, la grille de décharge peut être montée en sortie du conduit.

Dans un autre objet de l'invention, il est proposé un turboréacteur comprenant une nacelle, un carter intermédiaire et un carter interne coaxiaux, et une vanne de décharge telle que définie ci-dessus, le carter intermédiaire et le carter interne délimitant entre eux une veine primaire d'écoulement de fluide, la nacelle et le carter intermédiaire délimitant entre eux une veine secondaire d'écoulement de fluide, et la vanne de décharge étant montée et entre la veine primaire et la veine secondaire et configurée pour prélever une portion de l'air dans la veine primaire et la délivrer dans la veine secondaire.

Dans un autre objet de l'invention, il est proposé un turboréacteur comprenant une nacelle, un carter intermédiaire et un carter interne coaxiaux, et une vanne de décharge telle que définie ci-dessus, le carter intermédiaire et le carter interne délimitant entre eux une veine primaire d'écoulement de fluide dans laquelle est montée une chambre de combustion, la nacelle et le carter intermédiaire délimitant entre eux une veine secondaire d'écoulement de fluide, et la vanne de décharge étant configurée pour prélever une portion de l'air dans la veine primaire en amont de la chambre de combustion et la délivrer dans la veine primaire en aval de la chambre de combustion.

### Brève description des dessins

[Fig. 1] La figure 1, déjà décrite, présente une vue en section dans un plan longitudinal d'un turboréacteur selon l'état de la technique avec une vanne de décharge à réinjection dans le flux primaire.
[Fig. 2] La figure 2, déjà décrite, présente une vue en section dans un plan longitudinal d'un turboréacteur selon l'état de la technique avec une vanne de décharge à réinjection dans le flux primaire.
[Fig. 3A] La figures 3A illustre schématiquement une vue en coupe d'une vanne de décharge selon un premier mode de réalisation de l'invention respectivement avec la grille disposée à l'intérieur du conduit.
[Fig. 3B] La figures 3B illustre schématiquement une vue en coupe d'une vanne de décharge selon un premier mode de réalisation de l'invention respectivement avec la grille montée en sortie du conduit.
[Fig. 4] La figure 4 présente schématiquement une vue en section d'une grille d'une vanne de décharge selon un deuxième mode de réalisation respectivement avec la grille disposée à l'intérieur du conduit.
[Fig. 5] La figure 5 présente schématiquement une vue en section d'une portion d'une grille d'une vanne de décharge selon un troisième mode de réalisation respectivement avec la grille disposée à l'intérieur du conduit.
[Fig. 6] La figure 6 présente schématiquement une vue en section d'une portion d'une grille d'une vanne de décharge selon un quatrième mode de réalisation respectivement avec la grille disposée à l'intérieur du conduit.

### Description des modes de réalisation

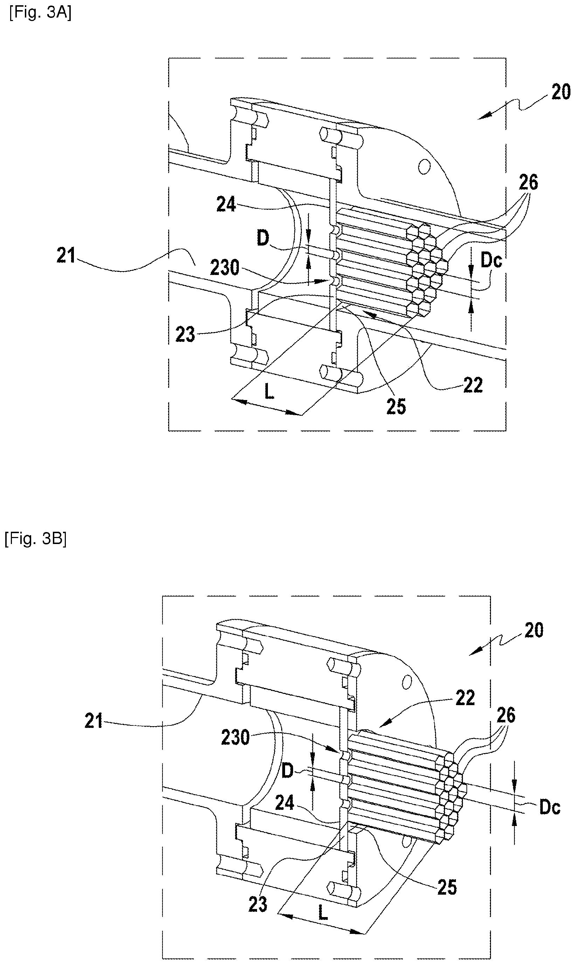

Sur les figures 3A et 3B sont illustrées schématiquement deux vues en coupe d'une vanne de décharge selon un premier mode de réalisation de l'invention respectivement avec la grille disposée à l'intérieur du conduit et à la sortie du conduit de la vanne de décharge.

La vanne de décharge 20 pour turboréacteur d'aéronef comprend un conduit 21 destiné à acheminer un flux gazeux F et une grille 22. La grille 22 comporte une plaque 23 perforée d'une multitude d'orifices 230 et des canaux 26.

La plaque perforée 23, traversée par le flux gazeux F, comprend une première face 24, ou face amont, en regard du flux gazeux F, c'est-à-dire recevant le flux F, et une seconde face 25, ou face aval, par laquelle le flux F s'échappe après avoir traversé la plaque perforée 23 via les orifices 230. La seconde face 25 est opposée à la première face 24 et parallèle à celle-ci. Les orifices 230 traversent ainsi la plaque 23 de la face amont 24 à la face aval 25.

La grille 22 comprend un canal 26 pour chaque orifice 230 de la plaque 23. Chaque canal 26 s'étend depuis la face aval 25 de la plaque 23 est coaxial avec l'orifice associé avec lequel il est associé.

Dans le premier mode de réalisation illustré sur les figures 3A et 3B, chaque canal 26 forme un cylindre creux à base quelconque, et de préférence à base circulaire ou hexagonale, dont les génératrices s'étendent dans une direction orthogonale au plan dans lequel s'étend la plaque perforée 23. Autrement dit, les canaux 26 forment des cylindres creux rectilignes d'une longueur L identique. Et dans le cas où les cylindres sont à base hexagonale, ils forment ensemble une structure en nid d'abeille.

Les canaux 26 permettent ainsi le développement des jets issus des orifices 230 tout en retardant un maximum l'interaction entre les différents jets.

La grille 22 possède un périmètre extérieur dont la forme correspond à la forme du périmètre intérieur du conduit 21. Sur la figure 3A, la grille 22 est insérée à l'intérieur du conduit 21 pour obturer partiellement le conduit 21 sur une section située entre l'entrée et la sortie du conduit 21, tandis que sur la figure 3B, la grille 22 est insérée à une extrémité du conduit 21 à l'intérieur du conduit 21 pour obturer partiellement la sortie du conduit 21. Dans les deux cas de figure, le conduit 21 n'est obstruée que partiellement en ce que le flux F peut s'écouler par les canaux de la grilles 22, et uniquement par ces canaux 23.

Le plan dans lequel les vues en section des figures 3A et 3B sont réalisées est un plan comprenant la direction le long de laquelle s'étend le conduit 21, autrement dit une direction axiale D_{A} du cylindre formé par le conduit 21 dans le cadre de l'exemple illustré sur les figures 3A et 3B, et une direction orthogonale à la direction axiale D_{A} et parallèle au plan dans lequel s'étend la plaque perforée 22, c'est-à-dire une direction radiale D_{R}.

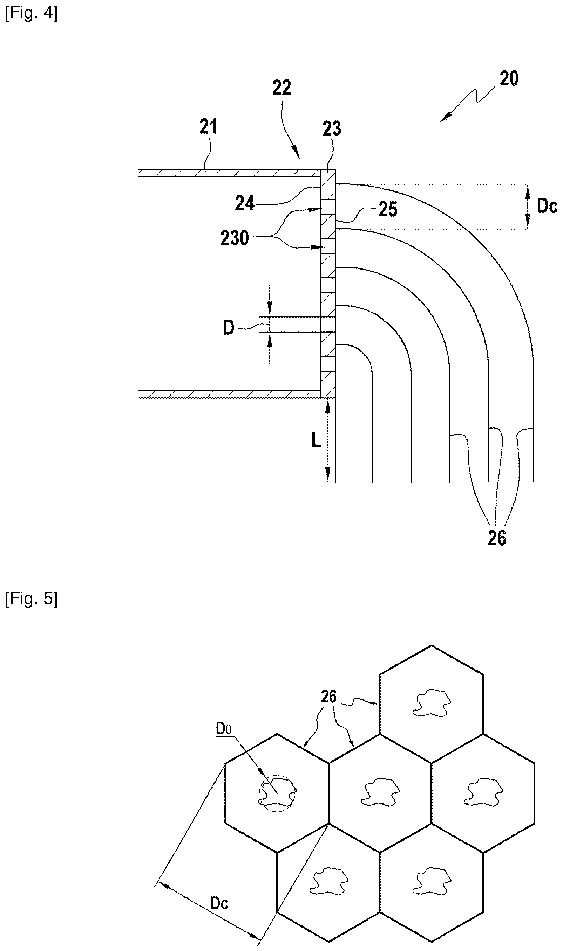

Sur la figure 4 est illustrée schématiquement une vue schématique en section d'une vanne de décharge selon un deuxième mode de réalisation de l'invention respectivement avec la grille disposée à l'intérieur du conduit et à la sortie du conduit de la vanne de décharge.

Le deuxième mode de réalisation diffère du premier mode de réalisation illustré sur les figures 3A et 3B en ce que les canaux 26 ne sont pas des cylindres creux rectilignes mais des tubes non rectilignes formant un angle à 90° pour dévier les jets dans une direction différente de la direction d'incidence du flux gazeux F sur la grille 22. La longueur L du canal 26 correspond dans ce mode de réalisation à la longueur du tube sur tout son parcours.

Dans les deux modes de réalisation présentés sur les figures 3A, 3B et 4, les orifices 230 sont des orifices circulaires ayant un diamètre D, et les canaux ont une longueur L comprise entre une fois le diamètre D et cent fois le diamètre D, soit D<L<1 00D, tandis que la base des cylindres ou la section des tubes présente un diamètre De compris entre une fois le diamètre D et cinq fois le diamètre D, soit D<Dc<5Dc.

Dans le cas où les orifices de la plaque perforée ne sont pas circulaires mais néanmoins de forme et de répartition uniformes sur la plaque perforée comme cela est illustré sur la figure 5, le diamètre caractéristique correspond au diamètre D₀ d'une section circulaire équivalente à la surface d'un orifice.

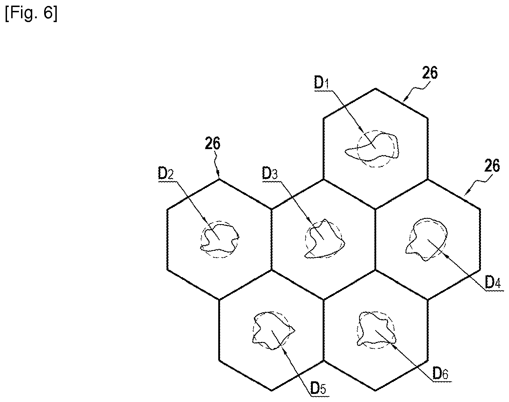

Dans le cas où les orifices de la plaque perforée ne sont ni circulaires, ni de forme équivalentes, mais néanmoins de répartition uniforme comme cela est illustré sur la figure 6, le diamètre caractéristique correspond à la moyenne des diamètres D₁ à D₆ des sections équivalentes à la surface de chaque orifice.

Une section de canal trop petite, c'est-à-dire inférieure au diamètre caractéristique, impliquerait une faible dissipation du jet isolé issu de chaque orifice de la plaque perforée. Au contraire, un canal de trop grande section, c'est-à-dire supérieur à cinq fois le diamètre caractéristique, n'optimiserait pas l'encombrement dans l'intégration moteur.

Les vannes de décharge selon les premiers et seconds modes de réalisation sont destinées à être montés sur des turboréacteurs tels que ceux présentés sur les figures 1 et 2.

L'invention permet ainsi d'avoir une vanne de décharge dotée d'une grille améliorée permettant de minimiser l'intensité des phénomènes aéro-acoustiques générés par les systèmes de décharge dotés d'une grille perforée.

## Revendications

1. Grille de décharge (22) destinée à être montée à l'intérieur ou en sortie d'un conduit (21) d'une vanne de décharge (20) d'une turbomachine (1) d'un aéronef, la grille de décharge comportant une plaque perforée (23) comprenant une face amont (24) destinée à recevoir un flux gazeux (F), une face aval (25) destinée à délivrer le flux gazeux (F) reçue sur la face amont (24), et des orifices (230) traversant la plaque perforée (23) de la face amont (24) à la face aval (25) et destinés à acheminer le flux gazeux (F) au travers de la plaque perforée (23),
**caractérisée en ce que** la grille de décharge (22) comprend pour chaque orifice (230) de la plaque perforée (23) un canal (26) tubulaire, coaxial à l'orifice auquel il est associé, et s'étendant en saillie depuis la face aval (25) de la plaque perforée (23).

2. Grille de décharge (22) selon la revendication 1, dans laquelle les canaux (26) forment une structure en nid d'abeille.

3. Grille de décharge (22) selon l'une des revendications 1 ou 2, dans laquelle les canaux (26) comprennent une section de passage définie dans un plan parallèle à la face aval (25) de la plaque perforée (23), la section de passage des canaux (26) ayant une longueur la plus grande dans le plan de la section comprise entre une et cinq fois un diamètre caractéristique des orifices (230).

4. Grille de décharge (22) selon la revendication 3, dans laquelle la section de passage des canaux (26) possède une longueur la plus grande dans le plan de la section égale à deux fois le diamètre caractéristique des orifices (230).

5. Grille de décharge (22) selon l'une des revendications 1 à 4, dans laquelle les canaux (26) s'étendent entre une première extrémité ouverte communicant avec un orifice et une seconde extrémité ouverte sur une longueur (L) comprise entre une fois et cent fois le diamètre caractéristique (D) des orifices (230).

6. Grille de décharge (22) selon la revendication 5, dans laquelle les canaux (26) sont tous cylindriques, rectilignes et ont tous la même longueur.

7. Grille de décharge (22) selon la revendication 5, dans laquelle les canaux (26) sont des canaux non rectilignes pour guider l'écoulement dans une direction distincte de la direction orthogonale au plan dans lequel s'étend la plaque perforée (23).

8. Vanne de décharge (20) pour turboréacteur (1) d'aéronef comprenant un conduit (21) destiné à acheminer un flux gazeux (F) et au moins une grille de décharge (22) selon l'une des revendications 1 à 7 montée à l'intérieur du conduit (21) ou sur une sortie (212, 213) du conduit (21).

9. Vanne de décharge (20) selon la revendication 8, dans laquelle la grille de décharge (22) est montée à l'intérieur du conduit (21).

10. Vanne de décharge (20) selon la revendication 8, dans laquelle la grille de décharge (22) est montée en sortie du conduit (21).

11. Turboréacteur (1) comprenant une nacelle (2), un carter intermédiaire (3) et un carter interne (4) coaxiaux, et une vanne de décharge (20) selon la revendication 8, le carter intermédiaire (3) et le carter interne (4) délimitant entre eux une veine primaire (7) d'écoulement de fluide, la nacelle (2) et le carter intermédiaire (3) délimitant entre eux une veine secondaire (8) d'écoulement de fluide, et la vanne de décharge (20) étant montée entre la veine primaire (7) et la veine secondaire (8) et configurée pour prélever une portion de l'air dans la veine primaire (7) et la délivrer dans la veine secondaire (8).

12. Turboréacteur (1) comprenant une nacelle (2), un carter intermédiaire (3) et un carter interne (4) coaxiaux, et une vanne de décharge (20) selon la revendication 8, le carter intermédiaire (3) et le carter interne (4) délimitant entre eux une veine primaire (7) d'écoulement de fluide dans laquelle est montée une chambre de combustion (13), la nacelle (2) et le carter intermédiaire (3) délimitant entre eux une veine secondaire (8) d'écoulement de fluide, et la vanne de décharge (20) étant configurée pour prélever une portion de l'air dans la veine primaire (7) en amont de la chambre de combustion (13) et la délivrer dans la veine primaire (7) en aval de la chambre de combustion (13).

## Patentansprüche

1. Entladungsnetz (22), das dazu gedacht ist, im Inneren oder am Ausgang einer Leitung (21) eines Ablassventils (20) einer Turbomaschine (1) eines Luftfahrzeugs montiert zu sein, wobei das Entladungsnetz eine perforierte Platte (23) beinhaltet, die eine stromaufwärtige Seite (24), die dazu gedacht ist, einen Gasstrom (F) aufzunehmen, eine stromabwärtige Seite (25), die dazu gedacht ist, den auf der stromaufwärtigen Seite (24) aufgenommenen Gasstrom (F) zu liefern, und Öffnungen (230) umfasst, welche die perforierte Platte (23) von der stromaufwärtigen Seite (24) zu der stromabwärtigen Seite (25) durchqueren und dazu gedacht sind, den Gasstrom (F) durch die perforierte Platte (23) weiterzuleiten,
**dadurch gekennzeichnet, dass** das Entladungsnetz (22) für jede Öffnung (230) der perforierten Platte (23) einen rohrförmigen Kanal (26) umfasst, der koaxial zu der Öffnung ist, mit der er verbunden ist, und sich vorstehend von der stromabwärtigen Seite (25) der perforierten Platte (23) erstreckt.

2. Entladungsnetz (22) nach Anspruch 1, wobei die Kanäle (26) eine Wabenstruktur bilden.

3. Entladungsnetz (22) nach einem der Ansprüche 1 oder 2, wobei die Kanäle (26) einen Durchlassabschnitt umfassen, der in einer Ebene parallel zu der stromabwärtigen Seite (25) der perforierten Platte (23) definiert ist, wobei der Durchlassabschnitt der Kanäle (26) eine größte Länge in der Ebene des Abschnittes aufweist, die zwischen dem Ein- bis Fünffachen eines kennzeichnenden Durchmessers der Öffnungen (230) umfasst ist.

4. Entladungsnetz (22) nach Anspruch 3, wobei der Durchlassabschnitt der Kanäle (26) eine größte Länge in der Ebene des Abschnittes besitzt, die gleich dem Zweifachen des kennzeichnenden Durchmessers der Öffnungen (230) ist.

5. Entladungsnetz (22) nach einem der Ansprüche 1 bis 4, wobei sich die Kanäle (26) zwischen einem ersten offenen Ende, das mit einer Öffnung kommuniziert, und einem zweiten offenen Ende auf einer Länge (L) erstrecken, die zwischen dem Einfachen bis Hundertfachen des kennzeichnenden Durchmessers (D) der Öffnungen (230) umfasst ist.

6. Entladungsnetz (22) nach Anspruch 5, wobei die Kanäle (26) alle zylindrisch, geradlinig sind und alle die gleiche Länge aufweisen.

7. Entladungsnetz (22) nach Anspruch 5, wobei die Kanäle (26) nichtgeradlinige Kanäle sind, um die Strömung in eine Richtung zu lenken, die sich von der orthogonalen Richtung zu der Ebene, in der sich die perforierte Platte (23) erstreckt, unterscheidet.

8. Ablassventil (20) für einen Turboreaktor (1) eines Luftfahrzeugs, umfassend eine Leitung (21), die dazu gedacht ist, einen Gasstrom (F) weiterzuleiten, und mindestens ein Entladungsnetz (22) nach einem der Ansprüche 1 bis 7, das im Inneren der Leitung (21) oder an einem Ausgang (212, 213) der Leitung (21) montiert ist.

9. Ablassventil (20) nach Anspruch 8, wobei das Entladungsnetz (22) im Inneren der Leitung (21) montiert ist.

10. Ablassventil (20) nach Anspruch 8, wobei das Entladungsnetz (22) am Ausgang der Leitung (21) montiert ist.

11. Turboreaktor (1), umfassend eine Gondel (2), ein Zwischengehäuse (3) und ein Innengehäuse (4), die koaxial sind, und ein Ablassventil (20) nach Anspruch 8, wobei das Zwischengehäuse (3) und das Innengehäuse (4) zwischen sich eine primäre Ader (7) für die Strömung von Fluid begrenzen, wobei die Gondel (2) und das Zwischengehäuse (3) zwischen sich eine sekundäre Ader (8) für die Strömung von Fluid begrenzen, und das Ablassventil (20) zwischen der primären Ader (7) und der sekundären Ader (8) montiert und dazu ausgestaltet ist, einen Teil der Luft in der primären Ader (7) zu entnehmen und an die sekundäre Ader (8) zu liefern.

12. Turboreaktor (1), umfassend eine Gondel (2), ein Zwischengehäuse (3) und ein Innengehäuse (4), die koaxial sind, und ein Ablassventil (20) nach Anspruch 8, wobei das Zwischengehäuse (3) und das Innengehäuse (4) zwischen sich eine primäre Ader (7) für die Strömung von Fluid begrenzen, in der eine Brennkammer (13) montiert ist, wobei die Gondel (2) und das Zwischengehäuse (3) zwischen sich eine sekundäre Ader (8) für die Strömung von Fluid begrenzen, und das Ablassventil (20) dazu ausgestaltet ist, einen Teil der Luft in der primären Ader (7) stromaufwärts der Brennkammer (13) zu entnehmen und an die sekundäre Ader (8) stromabwärts der Brennkammer (13) zu liefern.

## Claims

1. A discharge grate (22) intended to be mounted inside or at the outlet of a conduit (21) of a discharge valve (20) of a turbine engine (1) of an aircraft, the discharge grate including a perforated plate (23) comprising an upstream face (24) intended to receive a gas flow (F), a downstream face (25) intended to deliver the gas flow (F) received on the upstream face (24), and orifices (230) passing through the perforated plate (23) from the upstream face (24) to the downstream face (25) and intended to convey the gas flow (F) through the perforated plate (23), **characterized in that** the discharge grate (22) comprises for each orifice (230) of the perforated plate (23) a tubular channel (26), coaxial with the orifice with which it is associated, and projecting from the downstream face (25) of the perforated plate (23).

2. The discharge grate (22) according to claim 1, wherein the channels (26) form a honeycomb structure.

3. The discharge grate (22) according to one of claims 1 or 2, wherein the channels (26) comprise a passage section defined in a plane parallel to the downstream face (25) of the perforated plate (23), the passage section of the channels (26) having a greatest length in the plane of the section comprised between one and five times a characteristic diameter of the orifices (230).

4. The discharge grate (22) according to claim 3, wherein the passage section of the channels (26) has a greatest length in the plane of the section equal to twice the characteristic diameter of the orifices (230).

5. The discharge grate (22) according to one of claims 1 to 4, wherein the channels (26) extend between a first open end communicating with an orifice and a second open end over a length (L) comprised between one time and one hundred times the characteristic diameter (D) of the orifices (230).

6. The discharge grate (22) according to claim 5, wherein the channels (26) are all cylindrical, straight and all have the same length.

7. The discharge grate (22) according to claim 5, wherein the channels (26) are non-rectilinear channels to guide the flow in a direction distinct from the direction orthogonal to the plane in which the perforated plate (23) extends.

8. A discharge valve (20) for an aircraft turbojet engine (1) comprising a conduit (21) intended to convey a gas flow (F) and at least one discharge grate (22) according to one of claims 1 at 7 mounted inside the conduit (21) or on an outlet (212, 213) of the conduit (21).

9. The discharge valve (20) according to claim 8, wherein the discharge grate (22) is mounted inside the conduit (21).

10. The discharge valve (20) according to claim 8, wherein the discharge grate (22) is mounted at the outlet of the conduit (21).

11. A turbojet engine (1) comprising a nacelle (2), a coaxial intermediate casing (3) and internal casing (4), and a discharge valve (20) according to claim 8, the intermediate casing (3) and the internal casing (4) delimiting therebetween a primary flow path (7) for a fluid flow, the nacelle (2) and the intermediate casing (3) delimiting therebetween a secondary flow path (8) for a fluid flow, and the discharge valve (20) being mounted between the primary flow path (7) and the secondary flow path (8) and configured to withdraw a portion of the air in the primary flow path (7) and deliver it into the secondary flow path (8).

12. The turbojet engine (1) comprising a nacelle (2), a coaxial intermediate casing (3) and internal casing (4), and a discharge valve (20) according to claim 8, the intermediate casing (3) and the internal casing (4) delimiting therebetween a primary flow path (7) for a fluid flow in which a combustion chamber (13) is mounted, the nacelle (2) and the intermediate casing (3) delimiting therebetween a secondary flow path (8) for a fluid flow, and the discharge valve (20) being configured to withdraw a portion of the air in the primary flow path (7) upstream of the combustion chamber (13) and deliver it into the primary flow path (7) downstream of the combustion chamber (13)
